# EUROPÄISCHE PATENTSCHRIFT

(11) **EP 3 233 759 B1**
(45) Veröffentlichungstag und Bekanntmachung des Hinweises auf die Patenterteilung: **01.05.2019**
(21) Anmeldenummer: 15813725.7
(22) Anmeldetag: 08.12.2015
(51) Int. Cl.: C05D 9/00, C05F 9/04, C05F 11/02, C05F 11/04, C05F 17/00

(54) **VERFAHREN ZUR HERSTELLUNG NÄHRSTOFFREICHER BÖDEN ODER BODENSUBSTRATE**
METHOD FOR PRODUCING NUTRIENT-RICH SOILS OR SOIL SUBSTRATES
PROCÉDÉ DE PRODUCTION DE SOLS OU SUBSTRATS DE SOLS RICHES EN NUTRIMENTS

(30) Priorität: 19.12.2014 DE 102014119248; 21.04.2015 DE 102015106046
(43) Veröffentlichungstag der Anmeldung: 25.10.2017
(73) Patentinhaber: Aumann, Franz, 49661 Cloppenburg (DE)
(72) Erfinder: Aumann, Franz, 49661 Cloppenburg (DE)
(74) Vertreter: Jabbusch, Matthias
(86) Internationale Anmeldenummer: PCT/EP2015/078898
(87) Internationale Veröffentlichungsnummer: WO 2016/096517

(56) Entgegenhaltungen:
- EP-A1- 1 739 067
- EP-A2- 0 168 556
- WO-A1-2009/021528
- WO-A2-2009/149944
- DE-B- 1 151 005

## Beschreibung

### Technisches Gebiet

Die vorliegende Erfindung betrifft ein Verfahren zur Herstellung nährstoffreicher und wasserspeichernder Böden oder Bodensubstrate gemäß dem Oberbegriff des Patentanspruchs 1.

### Stand der Technik

Terra Preta do Indio, auch unter der Bezeichnung "Indianer-Schwarzerde" bekannt, ist eine aus dem Amazonasraum bekannte Bodenstruktur, die durch Naturvölker und indianischen Hochkulturen geschaffen wurde. Die aus dem Amazonasraum bekannte Indianer-Schwarzerde entsteht aus Asche, Verkohlungsrückständen und pyrogenem Kohlenstoff, die z.B. bei Brandrodungen entstehen, Biomasse, einschließlich Küchenabfällen, Knochen und menschlichen Fäkalien. Durch Mikroorganismen und Bodentiere wird ein Teil der organischen Substanz abgebaut (Mineralisierung) und stabilisiert. In jüngerer Zeit wurde Terra Preta und hierzu ähnliche Substrate wiederentdeckt, um den Humusanteil landwirtschaftlich genutzter Flächen zu steigern und der Versteppung entgegenzuwirken.

Das Buch "Terra Preta - Die schwarze Revolution aus dem Regenwald", 4. Auflage, 2014, von Ute Scheub, Heiko Pieplow, Hans-Peter Schmidt beschreibt ausführlich die Verwendungsvielfalt und den Nutzen der Verwendung von Terra Preta im Gartenbau und in der Landwirtschaft. In dessen Kapitel 4 werden die Herstellungsmethoden von Terra Preta insbesondere für private Nutzer beschrieben. Auf S. 128 des Buches wird erwähnt, dass die ideale Temperatur für die Fermentation bei 35 bis 40 °Celsius liegt.

Die Druckschrift WO 2009/149944 A2 beschreibt ein Verfahren zur Herstellung von Kultursubstraten oder Bodenhilfsstoffen oder organischen Düngern mit Eigenschaften von Terra Preta, bei dem organische Biomassen und mineralische Stoffe einer Milchsäuregärungsprozess ausgesetzt werden, wobei in der Fermentationsstufe zumindest Kohlenstoff mit großem Porenvolumen enthalten ist. Der Biomasse werden Zuschlagstoffe wie Gesteine, Erden, Böden, Lava, Bims, Basalt, Ton, Lehm, Bentonit, Kalk, Sandsteingrieß zugemengt. Bakterien werden der Biomasse vor der Fermentationsstufe zugegeben. Die Druckschrift EP 2 188 230 B1 beschreibt ein Verfahren zur Herstellung von humus- und nährstoffreichen sowie wasserspeichernden Böden oder Bodensubstraten mit Eigenschaften anthropogener Bodenarten (Terra Preta) für nachhaltige Landnutzungs- und Siedlungssysteme. Bei dem Verfahren wird pyrogener Kohlenstoff und organische Biomasse einem Fermentationsprozess ausgesetzt. Ziel ist die Erzeugung eines außerordentlich produktiven, fruchtbaren Bodens ausgehend von einem unfruchtbaren und nährstoffarmen Boden.

Wie in der EP 2 188 230 B1 beschreiben, eignet sich der Boden oder das Bodensubstrat als Bodenersatz, als Bodenergänzungsmittel, zur Begrünung von Siedlungen, zur Erosionshemmung, zur Verbesserung von regionalen Wasserhaushalten, zur Hochwasserprävention, zur Verminderung des Kohlendioxidgehaltes in der Atmosphäre (Klimaschutz) durch Einlagerung des Kohlenstoffs in den Boden, zur Schmutzwasserreinigung- und Aufbereitung, zur Abluftreinigung und Gebäudeluftreinigung, zur Schaffung von Stoffstromkreisläufen aus biogenen Abfällen und/oder Abwässern zur Entwicklung und Nutzbarmachung von Landnutzungs- und Siedlungssystemen.

In der EP 2 188 230 B1 werden zur Erzeugung eines zu Terra Preta ähnlichen Bodensubstrats folgende Schritte vorgeschlagen:
(a) Vermischung von zerkleinertem und/oder gesiebtem pyrogenem Kohlenstoff mit zuvor zerkleinerter und homogenisierter leicht zersetzbarer organischer Biomasse,
(b) Animpfung des Gemisches durch Beimischung einer Starterkultur aus Mikroorganismen zur Durchführung einer Milchsäuregärung und/oder bereits hergestellten Bodensubstraten und/oder eine dem Milchsäuregärungsprozess ausgesetzte Biomasse,
(c) Inkubation des Gemisches zur Durchführung einer Fermentation bei einer Temperatur von weniger als 40°C und einem pH-Wert im sauren Bereich, wobei während des Fermentationsprozesses ein Ablauf zur Bodenentwässerung vorgesehen ist.

Es wird für eine Ausführungsform vorgeschlagen, die in der Pyrolyse zur Herstellung des Kohlestoffes entstehende erhitzte Luft zur Optimierung des Fermentationsprozesses zu verwenden. Die aus der Pyrolyse stammende heiße Abwärme wird auf die für den Fermentationsprozess erforderliche Temperatur (30 bis 40 °C) eingestellt und dem Gemisch zur Erreichung der Fermentationstemperatur zugeführt.

Aus der Druckschrift US 6,200,475 B1 ist dagegen ein Verfahren zur Umwandlung organischer Abfälle durch Fermentation bekannt, bei dem durch Energiezufuhr von einer externen Energiequelle eine Temperatur zwischen 45 °C und 100 °C eingestellt wird, damit der Fermentationsprozess innerhalb von 24 Stunden abgeschlossen ist. Für diesen Vorgang sind aufwändige Vorrichtungen sowie der Einsatz von Heizenergie erforderlich, wodurch das Verfahren teuer wird.

### Offenbarung der Erfindung

Aufgabe der Erfindung ist es, ein Verfahren zur Herstellung nährstoffreicher und wasserspeichernder Böden oder Bodensubstrate zu optimieren, um die Qualität der Böden oder Bodensubstrate zu steigern. Insbesondere soll ein kostengünstiges, stabiles und effektives Verfahren vorgeschlagen werden, um auch aus schwer zu entsorgender Biomasse, wie z.B. Gärresten von Biogasanlagen oder Klärschlämmen, ein hochwertiges und nährstoffreiches Bodensubstrat zu erzeugen.

Diese Aufgabe wird erfindungsgemäß durch die Merkmale des Patentanspruchs 1 gelöst. Weitere vorteilhafte Ausführungsformen ergeben sich aus den abhängigen Ansprüchen.

Ein Verfahren zur Herstellung nährstoffreicher und wasserspeichernder Böden oder Bodensubstrate mit folgenden Schritten:
(a) Herstellung eines Gemischs aus zerkleinertem pyrogenem Kohlenstoff und leicht zersetzbarer organischer Biomasse,
(b) Beimischung von Mikroorganismen zur Durchführung einer Fermentation der Biomasse, ist gekennzeichnet durch folgende Schritte:
(c) Aktivierung der Mikroorganismen vor der Beimischung durch Zugabe eines Fermentationsaktivators in einer wässrigen Lösung,
(d) Beimischung eines Keramikpulvers zu der wässrigen Lösung mit aktivierten Mikroorganismen,
(e) Durchführung der Fermentation, wobei durch die Fermentation ohne Zufuhr externer Energie für einen Zeitraum von mehr als einem Tag eine Temperatur von mehr als 60°C erreicht wird.

Durch die Aktivierung der Mikroorganismen und durch die Beimischung des Keramikpulvers, welches die Mikroorganismen und den Fermentationsprozess stabilisiert, entsteht bei der Fermentation des Gemischs eine erhebliche Wärmeenergie, die eine Miete bestehend aus dem genannten Gemisch auf eine hohe Temperatur in der Größenordnung von 60°C aufheizt. Diese hohe Temperatur wird für mehr als einen Tag und in der Praxis für einen Zeitraum von 5 bis 10 Tagen gehalten. Durch diese hohe Temperatur werden sämtliche Keime und Erreger in der Miete vernichtet. Am Ende des Fermentations- und Lagerungsprozesses in der Miete, der etwa 10 bis 12 Wochen dauert, entsteht ein sehr dunkles, nährstoffreiches Bodensubstrat mit hoher Wasserspeicherkapazität.

In der Praxis kann die Fermentation des Gemischs in einer abgedeckten Miete durchgeführt werden. Die Miete kann mit einer dunklen Kunststoffplane abgedeckt werden, welche zum einen die Fermentationsenergie innerhalb der Miete hält und zum anderen durch Sonneneinstrahlung weitere Wärmeenergie aufnimmt. Die hohe Temperatur von mehr als 60°C kann in der Miete bis in einen an die Abdeckung angrenzenden Bereich herrschen.

Als Biomasse können vielfältige in landwirtschaftlichen Betrieben oder auch Kläranlagen anfallende Reststoffe verwendet werden. Insbesondere kann die Biomasse zumindest zur Hälfte aus einem der folgenden Bestandteile bestehen:
- ausgepresste Gärreste aus Biogasanlagen;
- Klärschlamm;
- Feststoffe aus Gülle;
- Mist;
- entsorgte Einstreu aus der Tierhaltung, insbesondere Geflügelhaltung.

In Gebieten mit intensiver Tierhaltung fällt häufig so viel Mist, Gülle und verunreinigte Einstreu an, dass eine vollständige Verwendung als Dünger nicht möglich ist. Biomasse, insbesondere Gülle, wird oft in Biogasanlagen vergoren. Auch die Menge an anfallenden Gärresten aus Biogasanlagen ist in Gebieten mit intensiver Tierhaltung zu groß, um sie als Dünger auf die Felder zu bringen. Gemäß dem hier beschriebenen Verfahren lassen sich Reststoffe, welche Biomasse enthalten, zuverlässig in wertvolle Bodensubstrate umwandeln. Mit dem hier beschriebenen Verfahren lässt sich eine zuverlässige Umwandlung von ausgepressten Gärresten aus Biogasanlagen oder zentrifugierter Gülle in Terra Preta erreichen.

Die Fermentation bei hoher Temperatur verläuft derartig stabil und wirkungsvoll, dass sogar problematische Biomasse wie Klärschlamm zu einem wertvollen Bodensubstrat verarbeitet werden kann. Klärschlamm fällt in Kläranlagen bei der Reinigung von Abwässern an. Er ist reich an Nährstoffen, da Bakterien in der biologischen Stufe einer Kläranlage die Abwasserinhaltsstoffe zum Aufbau von Biomasse verwenden. Klärschlamm wird häufig verbrannt. Die Verwendung der darin enthaltenen Biomasse und Nährstoffe zur Herstellung nährstoffreicher und Wasser speichernder Bodensubstrate ist eine sehr umweltschonende Art der Entsorgung des Klärschlamms.

In der Praxis kann die Biomasse vor der Gemischherstellung entwässert werden. Werden Gärreste aus Biogasanlagen verwendet, so können diese ausgepresst werden. Gülle wird beispielsweise zentrifugiert, um überschüssiges Wasser zu entfernen und die Biomasse für die Fermentierung vorzubereiten.

Der pyrogene Kohlenstoff kann in der Praxis von Pyrolysekohle gebildet werden. Pyrolysekohle, oft auch als Pflanzenkohle oder Biokohle bezeichnet, kann durch pyrolytische Verkohlung rein pflanzlicher Ausgangsstoffe hergestellt werden. Sie weist eine extrem hohe Porosität, z.B. in der Größenordnung von 300 bis 400 m²/g auf. Es sind auch andere Karbonisierungsverfahren zur Kohleherstellung bekannt und können zur Produktion des verwendeten Kohlenstoffes eingesetzt werden. Die Pyrolyse hat aber den Vorteil, dass die entstehende Kohle sehr porig ist und eine große spezifische Oberfläche aufweist.

Der Kohlenstoff wird bei dem Fermentationsprozess mit Nährstoffen und Mikroorganismen aufgeladen und besiedelt. Er bildet eines der wesentlichen Elemente des entstehenden Bodensubstrats. Durch die Einlagerung in den Boden wird der Kohlenstoff ferner der Atmosphäre entzogen und so der CO₂-Gehalt reduziert. Die Reduktion des CO₂-Gehalts der Atmosphäre reduziert die Gefahr der Erderwärmung.

In der Praxis kann dem Gemisch vor der Fermentation ferner Steinmehl und Zeolithpulver beigemischt werden. Beispielsweise hat sich das sogenannte "Urgesteinsmehl" der Firma Carlo Bernasconi AG aus Zürich bewährt. Es handelt sich dabei um SiO₂-haltiges Hartsedimentgestein in gemahlener Form. Das Produkt enthält etwa 11 bis 12 Masseprozent Quarz (SiO₂), 21 bis 22 Masseprozent Calcit (CaCO₃), 21 bis 22 Masseprozent Dolomit ((Ca,Mg)CO₃), 12 bis 14 Masseprozent Albit (NaAlSi₃O₈) sowie 41 bis 44 Masseprozent XRD-Amorphe Fraktion. Auch dieses Urgesteinsmehl ist als Bodenverbesserungsmittel bekannt und bewährt.

Die Stoffbezeichnung des verwendeten Zeolithpulver lautet Klinoptilolith aus der Gruppe der Zeolithe. Es handelt sich um wasserhaltige Alumosilikate mit Calcium, Kalium bzw. Natrium als verbindenden Kationen. Auch Zeolithpulver ist ein bewehrter Zuschlagsstoff für den Garten und Landschaftsbau. Zeolithpulver hat ebenso wie Pyrolysekohle eine sehr große spezifische Oberfläche und kann hervorragend Feuchtigkeit und Nährstoffe speichern. Es kann in der Mischung zur Herstellung des Bodensubstrats daher der Mengenanteil an Zeolithpulver gesteigert und gleichzeitig der Mengenanteil an Pyrolysekohle gesenkt werden. Der Preis von Pyrolysekohle unterliegt erheblichen Schwankungen. Je nach aktuellem Preis der Pyrolysekohle und des Zeolithpulvers kann die Zusammensetzung kostenoptimierend gewählt werden.

In der Praxis kann das für die Fermentation vorgesehene Gemisch folgende Bestandteile aufweisen:
- 50 bis 60 Volumenprozent und vorzugsweise 53,4 Volumenprozent organische Biomasse;
- 15 bis 25 Volumenprozent und vorzugsweise 19,8 Volumenprozent Pyrolysekohle;
- 15 bis 25 Volumenprozent und vorzugsweise 19,8 Volumenprozent Steinmehl;
- 4 bis 6 Volumenprozent und vorzugsweise 5 Volumenprozent Zeolithpulver;
- 1,5 bis 2,5 Volumenprozent und vorzugsweise 2 Volumenprozent wässrige Lösung mit aktivierten Mikroorganismen;
- 0,075 bis 0,125 Volumenprozent und vorzugsweise 0,1 Volumenprozent Keramikpulver.

In der Praxis kann die wässrige Lösung mit aktivierten Mikroorganismen etwa zu gleichen Teilen aus effektiven Mikroorganismen gebildet werden, welche unter der Bezeichnung EM-1 z.B. von der Firma EMIKO Handelsgesellschaft mbH in Meckenheim vertrieben werden. Als Fermentationsaktivator für die Mikroorganismen wird vorzugsweise Zuckerrohrmelasse verwendet, die z.B. ebenfalls von EMIKO unter der Bezeichnung " Bio-Zuckerrohrmelasse" vertrieben wird. Zur Herstellung von etwa 20 Liter aktivierter Mikroorganismen EM-1 kann 1 Liter Zuckerrohrmelasse in etwa 10 Litern heißem Wasser aufgelöst werden. Anschließend werden weitere 8 bis 10 Liter kühles Wasser beigemischt, so dass sich eine Temperatur von etwa 30 bis 40 °C einstellt und 1 Liter EM-1 hinzugefügt.

In der Praxis fermentieren die aktivierten Mikroorganismen in der wässrigen Lösung für einen Zeitraum von etwa 7 Tagen, bevor sie dem Gemisch aus Biomasse und pyrogenem Kohlenstoff beigemengt werden. Das Keramikpulver zum Stabilisieren der Mikroorganismen besteht vorzugsweise aus Quarz (SiO₂) und Aluminiumoxid (AL₂O₃) im Verhältnis 80:20. Es kann beispielsweise unter der Bezeichnung EM Super Cera Ferment C von der Firma Maruishi Ceramics Materials Co. Ltd., Seto City, Japan bezogen werden. Das Keramikpulver kann vorzugsweise der wässrigen Lösung mit aktivierten Mikroorganismen zu Beginn den Fermentationsprozesses beigemischt. Hierdurch ergibt sich eine homogene Verteilung des Keramikpulvers in dem Gemisch während der Fermentation. Es ist aber auch möglich, das Keramikpulver durch eine Zerstäubungsvorrichtung fein verteilt auf das Gemisch bei der Erzeugung der Miete aufzubringen. Das Keramikpulver ist ein wesentlicher Faktor bei der Erreichung eines stabilen Fermentationsprozesses innerhalb der Miete mit einer hohen Temperatur von über 60 °C ohne Zufuhr externer Energie.

In der Praxis kann eine Alternative Zusammensetzung des für die Fermentation vorgesehenen Gemischs folgende Bestandteile aufweisen:
- 64 bis 74 Volumenprozent und vorzugsweise 69 Volumenprozent organische Biomasse;
- 2 bis 6 und vorzugsweise 4 Volumenprozent Pyrolysekohle;
- 10 bis 16 und vorzugsweise 13 Volumenprozent Zeolithpulver;
- 7 bis 13 und vorzugsweise 10 Volumenprozent Urgesteinsmehl;
- 0,5 bis 0, 9 und vorzugsweise 0,7 Volumenprozent Keramikpulver;
- 1,0 bis 1,8 und vorzugsweise 1,4 Volumenprozent wässrige Lösung mit aktivierten Mikroorganismen.

Es fällt auf, dass die Mischungszusammensetzung erheblich variieren kann. Aufgrund der aktivierten Mikroorganismen und des Keramikpulvers ist aber auch mit der vorstehend beschriebenen Zusammensetzung eine stabile Fermentation bei hohen Temperaturen von über 60 °C für einen mehrwöchigen Zeitraum zu erreichen. Es fällt ferner auf, dass der Anteil an Zeolithpulver und der Anteil an Pyrolysekohle sich im Vergleich zur erstgenannten Zusammensetzung nahezu umgekehrt hat. Wogegen bei der ersten Mischung der Kohleanteil etwa dem vierfachen des Zeolithanteils entsprach, ist bei der vorliegenden alternativen Mischung der Zeolithanteil knapp viermal so hoch wie der Kohleanteil. Kohle und Zeolith weisen in Pulverform beide eine sehr große spezifische Oberfläche auf. Um die erwünschte Speicherfähigkeit für Wasser und Nährstoffe zu erhalten, kann der Kohleanteil gesenkt werden, wenn der Zeolithanteil entsprechend gesteigert wird. Zeolith wie Kohlepulver können darüber hinaus Schadstoffe binden und sind daher für eine optimale Bodenaufbereitung sehr vorteilhaft.

Nach Abschluss der Fermentation werden dem Gemisch 1,0 bis 1,8 und vorzugsweise 1,4 Volumenprozent Meeresalgen zugeführt. Meeresalgen weisen 74 wertvolle Spurenelemente auf, die für das vorliegene Bodensubstrat vorteilhaft sind. Derartige Meeresalgen werden zum Beispiel von der Firma Wytor AG, Stauben, zur Bodenanreicherung und als Tierfutter vertrieben.

### Beschreibung eines Ausführungsbeispiels

Zur Herstellung etwa eines Kubikmeters (1.000 Liter) nährstoffreichen Bodensubstrats, welches der bekannten Schwarzerde ähnlich ist, werden folgende Ausgangsstoffe verwendet:
- 540 Liter Gärreste aus einer Biogasanlage;
- 200 Liter Pyrolysekohle (Pflanzenkohle);
- 200 Liter Urgesteinsmehl, sehr fein gemahlen;
- 50 Liter Zeolithpulver;
- etwa 20 Liter aktivierte Mikroorganismen EM-1;
- 1 Liter Keramikpulver.

Wie oben beschrieben, wird zunächst die Mischung aus ca. 18 bis 20 Liter Wasser, 1 Liter EM-1-Mikroorganismen und 1 Liter Fermentationsaktivator, nämlich Zuckerrohrmelasse angesetzt. Dieser Mischung wird der 1 Liter Keramikpulver beigegeben. Anschließend fermentieren die aktivierten Mikroorganismen für einen Zeitraum von etwa 1 Woche. Das Keramikpulver wird während dieses Vorgangs von Mikroorganismen besiedelt.

Am Ende dieses Zeitraums wird die Biomasse, also der ausgepresste Gärrest, mit der Pyrolysekohle, dem Urgesteinsmehl und dem Zeolithpulver vermischt und die wässrige Lösung aktivierter Mikroorganismen hinzugesetzt. Das Gemisch wird als Miete auf den Boden gehäuft und mit einer dunklen Kunststoffplane abgedeckt. Es beginnt sofort ein intensiver Fermentationsprozess, der eine Wärme freisetzt, die die Temperatur in der Miete auf 60°C und darüber ansteigen lässt. Die Temperatur von über 60°C wird für einen Zeitraum von etwa 1 Woche gehalten.

Wenn die Temperatur in der Miete wieder deutlich unter 60 °C abgesunken ist, treten aus dem umgebenden Erdreich Bodenlebewesen, insbesondere Kompostwürmer und andere Wurmarten, in die Miete ein, lockern diese auf und bewirken eine Kompostierung.

Nach etwa 6 Wochen Fermentationsdauer ist die Miete umzusetzen. Dabei werden die fermentierten Bestandteile der Miete noch einmal intensiv durchmischt. Das entstandene Bodensubstrat ein. Das Substrat ruht nach dem Umsetzen weitere 6 Wochen und wird dabei durch die Bodenlebewesen kompostiert und aufgelockert.

Die Fermentation kann natürlich auch in einem Fermentationsbehälter ablaufen. Die Fermentation in einer Miete auf der Freifläche wird aber aus mehreren Gründen bevorzugt. Hierdurch können auf natürliche Weise Bodenlebewesen in das entstehende Bodensubstrat eindringen, dieses kompostieren und auflockern. Die Bodenlebewesen wandern aus der Freifläche zu und müssen nicht extra eingebracht werden. Ferner können Kosten für besondere Fermentationsbehälter gespart werden und es ist auch die Herstellung sehr großer Mengen an Terra Preta ähnlichem Bodensubstrat ohne besondere technische Einrichtungen möglich.

Am Ende des insgesamt 12-wöchigen Prozesses ist ein dunkles, geruchsneutrales und äußerst nährstoffreiches Bodensubstrat entstanden, welches einen PH-Wert von 3 bis 4 aufweist und eingesetzt werden kann, um den Humusgehalt von landwirtschaftlich genutzten Böden zu steigern und der Versteppung entgegenzuwirken.

Bei einer alternativen Ausführungsform zur Herstellung von etwa 1,5 Kubikmetern nährstoffreichen Bodensubstrats werden folgende Ausgangsstoffe verwendet
1000 Liter Biomasse, z.B. Klärschlamm, Grasabfälle oder Strauchschnitt;
60 Liter Pyrolysekohle;
190 Liter Zeolithpulver;
150 Liter Urgesteinsmehl;
10 Liter Keramikpulver;
20 Liter aktivierte Mikroorganismen EM-1;
20 Liter Meeresalgen.

Wie bei dem vorangehenden Ausführungsbeispiel fermentiert das Gemisch, allerdings ohne die Meeresalgen, über einen längeren Zeitraum, vorzugsweise über mehrere Wochen bei einer Temperatur von über 60° C. Die Meeresalgen werden erst nach Abschluss der Fermentation hinzugegeben und reichern das entstandene Bodensubstrat mit Spurenelementen an.

## Patentansprüche

1. Verfahren zur Herstellung nährstoffreicher und wasserspeichernder Böden oder Bodensubstrate mit folgenden Schritten:
(f) Herstellung eines Gemischs aus zerkleinertem pyrogenem Kohlenstoff und leicht zersetzbarer organischer Biomasse,
(g) Beimischung von Mikroorganismen zur Durchführung einer Fermentation der Biomasse,
**gekennzeichnet durch** folgende Schritte:
(h) Aktivierung der Mikroorganismen vor der Beimischung durch Zugabe eines Fermentationsaktivators in einer wässrigen Lösung,
(i) Beimischung eines Keramikpulvers zu der wässrigen Lösung mit aktivierten Mikroorganismen,
(j) Durchführung der Fermentation, wobei durch die Fermentation ohne Zufuhr externer Energie für einen Zeitraum von mehr als einem Tag eine Temperatur von mehr als 60°C erreicht wird.

2. Verfahren nach Anspruch 1 , **dadurch gekennzeichnet, dass** die Temperatur von mehr als 60°C in dem Gemisch für einen Zeitraum von 5 bis 10 Tagen gehalten wird.

3. Verfahren nach Anspruch 1 oder 2, **dadurch gekennzeichnet, dass** die Fermentation des Gemischs in einer abgedeckten Miete erfolgt, wobei die Temperatur von mehr als 60°C in dem Gemisch bis in einen an die Abdeckung angrenzenden Bereich erreicht wird.

4. Verfahren nach einem der vorangehenden Ansprüche, **dadurch**
**gekennzeichnet, dass** die Biomasse zumindest zur Hälfte mindestens einen der folgenden Bestandteile aufweist:
- Feststoffe aus Gülle;
- Mist;
- Gärrest aus Biogasanlagen;
- Klärschlamm;
- entsorgten Einstreu aus der Tierhaltung, insbesondere Geflügelhaltung.

5. Verfahren nach einem der vorangehenden Ansprüche, **dadurch gekennzeichnet, dass** die Biomasse vor der Herstellung des Gemischs entwässert wird.

6. Verfahren nach einem der vorangehenden Ansprüche, **dadurch gekennzeichnet, dass** der Kohlenstoff von Pyrolysekohle gebildet wird.

7. Verfahren nach einem der vorangehenden Ansprüche, **dadurch gekennzeichnet, dass** dem Gemisch Steinmehl beigemischt wird.

8. Verfahren nach einem der vorangehenden Ansprüche, **dadurch gekennzeichnet, dass** dem Gemisch Zeolithpulver beigemischt wird.

9. Verfahren nach Anspruch 8, **dadurch gekennzeichnet, dass** das Gemisch aus folgenden Bestandteilen besteht:
• 50 bis 60 Volumenprozent und vorzugsweise 53,4 Volumenprozent organische Biomasse;
• 15 bis 25 Volumenprozent und vorzugsweise 19,8 Volumenprozent Pyrolysekohle;
• 15 bis 25 Volumenprozent und vorzugsweise 19,8 Volumenprozent Steinmehl;
• 4 bis 6 Volumenprozent und vorzugsweise 5 Volumenprozent Zeolithpulver;
• 1 ,5 bis 2,5 Volumenprozent und vorzugsweise 2 Volumenprozent wässrige Lösung mit aktivierten Mikroorganismen;
• 0,075 bis 0,125 Volumenprozent und vorzugsweise 0,1 Volumenprozent Keramikpulver.

10. Verfahren nach Anspruch 8, **dadurch gekennzeichnet, dass** das Gemisch vor der Fermentation folgende Bestandteile enthält:
• 64 bis 74 Volumenprozent und vorzugsweise 69 Volumenprozent organische Biomasse;
• 2 bis 6 und vorzugsweise 4 Volumenprozent Pyrolysekohle;
• 10 bis 16 und vorzugsweise 13 Volumenprozent Zeolithpulver;
• 7 bis 13 und vorzugsweise 10 Volumenprozent Urgesteinsmehl;
• 0,5 bis 0, 9 und vorzugsweise 0,7 Volumenprozent Keramikpulver;
• 1 ,0 bis 1 ,8 und vorzugsweise 1 ,4 Volumenprozent wässrige Lösung mit aktivierten Mikroorganismen.

11. Verfahren nach einem der vorangehenden Ansprüche, **dadurch gekennzeichnet, dass** die aktivierten Mikroorganismen als wässrige Lösung beigegeben werden, die etwa zu gleichen Teilen effektive Mikroorganismen, vorzugsweise EM-1 , und Fermentationsaktivator, zum Beispiel
Zuckerrohrmelasse, aufweist und etwa 80 bis 95 Volumenprozent Wasser enthält.

12. Verfahren nach Anspruch 11, **dadurch gekennzeichnet, dass** die wässrige Lösung mit aktivierten Mikroorganismen für einen Zeitraum von etwa 7 Tagen fermentiert, bevor sie dem Gemisch beigemischt wird.

13. Verfahren nach einem der vorangehenden Ansprüche, **dadurch gekennzeichnet, dass** nach Abschluss der Fermentation dem Boden oder Bodensubstrat Meeresalgen beigemischt werden.

14. Verfahren nach einem der vorangehenden Ansprüche, **dadurch gekennzeichnet, dass** das Keramikpulver Quarz und Aluminiumoxid enthält, vorzugsweise 80 Gewichtsprozent Quarz und 20 Gewichtsprozent Aluminiumoxid.

15. Verfahren nach einem der vorangehenden Ansprüche, **dadurch gekennzeichnet, dass** sich an die Fermentation bei einer Temperatur von mehr als 60 °C eine Kompostierung durch Bodenlebewesen, insbesondere Würmer, anschließt.

## Claims

1. A method for producing nutrient-rich and water-storing soils or soil substrates comprising the following steps:
(f) production of a mixture of comminuted pyrogenic carbon and readily decomposable organic biomass
(g) admixing of micro-organisms to effect fermentation of the biomass,
**characterized by** the following steps:
(h) activation of micro-organisms before they are admixed through the addition of a fermentation activator in an aqueous solution,
(i) admixing of a ceramic powder to the aqueous solution with activated micro-organisms,
(j) carrying out fermentation, wherein a temperature of more than 60 °C is reached for a period of more than one day through fermentation with no supply of external energy.

2. The method according to claim 1, **characterized in that** the temperature of over 60 °C in the mixture is maintained for a period of 5 to 10 days.

3. The method according to claim 1 or 2, **characterized in that** the fermentation of the mixture takes place in a covered pile, wherein the temperature of over 60 °C in the mixture is reached into a region adjacent to the cover.

4. The method according to one of the preceding claims, **characterized in that** at least half the biomass comprises at least one of the following constituents:
- solids from slurry;
- manure;
- fermentation residue from biogas plants;
- sewage sludge;
- used bedding from livestock farming, in particular poultry farming.

5. The method according to one of the preceding claims, **characterized in that** the biomass is drained of water before the mixture is produced.

6. The method according to one of the preceding claims, **characterized in that** the carbon is formed from pyrolytic coal.

7. The method according to one of the preceding claims, **characterized in that** rock flour is admixed to the mixture.

8. The method according to one of the preceding claims, **characterized in that** zeolite powder is admixed to the mixture.

9. The method according to claim 8, **characterized in that** the mixture is made up of the following constituents:
• 50 to 60 percent by volume and preferably 53.4 percent by volume organic biomass;
• 15 to 25 percent by volume and preferably 19.8 percent by volume pyrolitic coal;
• 15 to 25 percent by volume and preferably 19.8 percent by volume rock flour;
• 4 to 6 percent by volume and preferably 5 percent by volume zeolite powder;
• 1.5 to 2.5 percent by volume and preferably 2 percent by volume aqueous solution with activated micro-organisms;
• 0.075 to 0.125 percent by volume and preferably 0.1 percent by volume ceramic powder.

10. The method according to claim 8, **characterized in that** the mixture contains the following constituents prior to fermentation:
• 64 to 74 percent by volume and preferably 69 percent by volume organic biomass;
• 2 to 6 and preferably 4 percent by volume pyrolytic coal;
• 10 to 16 and preferably 13 percent by volume zeolite powder;
• 7 to 13 and preferably 10 percent by volume prehistoric rock flour;
• 0.5 to 0.9 and preferably 0.7 percent by volume ceramic powder;
• 1.0 to 1.8 and preferably 1.4 percent by volume aqueous solution with activated micro-organisms.

11. The method according to one of the preceding claims, **characterized in that** the activated micro-organisms are added as an aqueous solution which comprises roughly the same proportion of effective micro-organisms, preferably EM-1, and fermentation activator, for example sugar cane molasses, and contains roughly 80 to 95 percent by volume water.

12. The method according to claim 11, **characterized in that** the aqueous solution is fermented with activated micro-organisms for a period of around 7 days before it is admixed to the mixture.

13. The method according to one of the preceding claims, **characterized in that** upon completion of the fermentation seaweed is admixed to the soil or soil substrate.

14. The method according to one of the preceding claims, **characterized in that** the ceramic powder contains quartz and aluminium oxide, preferably 80 percent by weight quartz and 20 percent by weight aluminium oxide.

15. The method according to one of the preceding claims, **characterized in that** fermentation at a temperature of more than 60 °C is followed by composting by soil organisms, in particular worms.

## Revendications

1. Procédé pour la production de sols ou substrats de sols riches en nutriments et retenant l'eau, avec les étapes suivantes :
(f) la production d'un mélange à base de carbone pyrogène concassé et de biomasse organique se décomposant facilement,
(g) l'incorporation de micro-organismes pour la réalisation d'une fermentation de la biomasse,
**caractérisé par** les étapes suivantes :
(h) l'activation des micro-organismes avant l'incorporation par addition d'un activateur de fermentation dans une solution aqueuse,
(i) l'incorporation d'une poudre céramique dans la solution aqueuse avec des micro-organismes activés,
(j) la réalisation de la fermentation, dans lequel, grâce à la fermentation, on atteint une température de plus de 60 °C sans apport d'énergie externe pendant une période de plus d'une journée.

2. Procédé selon la revendication 1, **caractérisé en ce que** la température de plus de 60 °C est maintenue dans le mélange pendant une période de 5 à 10 jours.

3. Procédé selon la revendication 1 ou 2, **caractérisé en ce que** la fermentation du mélange s'effectue dans un silo temporaire recouvert, dans lequel la température de plus de 60 °C dans le mélange est atteinte jusque dans une zone limitrophe du recouvrement.

4. Procédé selon l'une des revendications précédentes, **caractérisé en ce que** la biomasse présente, au moins à raison de moitié, au moins l'un des ingrédients suivants :
- des matières solides de purin ;
- du fumier ;
- des digestats d'installations de biogaz ;
- des boues d'epuration;
- de la litière éliminée issue de l'élevage, en particulier l'élevage avicole.

5. Procédé selon l'une des revendications précédentes, **caractérisé en ce que** la biomasse est déshydratée avant la production du mélange.

6. Procédé selon l'une des revendications précédentes, **caractérisé en ce que** le carbone est formé par du charbon de pyrolyse.

7. Procédé selon l'une des revendications précédentes, **caractérisé en ce que** de la farine de roche est incorporée dans le mélange.

8. Procédé selon l'une des revendications précédentes, **caractérisé en ce que** de la poudre de zéolite est incorporée dans le mélange.

9. Procédé selon la revendication 8, **caractérisé en ce que** le mélange se compose des ingrédients suivants :
• 50 à 60 pour cent en volume, et de préférence 53,4 pour cent en volume de biomasse organique ;
• 15 à 25 pour cent en volume, et de préférence 19,8 pour cent en volume de charbon de pyrolyse ;
• 15 à 25 pour cent en volume, et de préférence 19,8 pour cent en volume de farine de roche ;
• 4 à 6 pour cent en volume, et de préférence 5 pour cent en volume de poudre de zéolite ;
• 1,5 à 2,5 pour cent en volume, et de préférence 2 pour cent en volume de solution aqueuse avec des micro-organismes activés ;
• 0,075 à 0,125 pour cent en volume, et de préférence 0,1 pour cent en volume de poudre céramique.

10. Procédé selon la revendication 8, **caractérisé en ce que** le mélange contient, avant la fermentation, les ingrédients suivants :
• 64 à 74 pour cent en volume, et de préférence 69 pour cent en volume de biomasse organique,
• 2 à 6, et de préférence 4 pour cent en volume de charbon de pyrolyse ;
• 10 à 16, et de préférence 13 pour cent en volume de poudre de zéolite ;
• 7 à 13, et de préférence 10 pour cent en volume de farine de roche primitive ;
• 0,5 à 0,9, et de préférence 0,7 pour cent en volume de poudre céramique ;
• 1,0 à 1,8, et de préférence 1,4 pour cent en volume de solution aqueuse avec des micro-organismes activés.

11. Procédé selon l'une des revendications précédentes, **caractérisé en ce que** les micro-organismes activés sont ajoutés en tant que solution aqueuse, laquelle présente à peu près à parts égales des micro-organismes efficaces, de préférence EM-1, et un activateur de fermentation, par exemple de la mélasse de sucre de canne, et contient à peu près 80 à 95 pour cent en volume d'eau.

12. Procédé selon la revendication 11, **caractérisé en ce que** la solution aqueuse avec des micro-organismes activés fermente pendant une période de près de 7 jours avant d'être incorporée dans le mélange.

13. Procédé selon l'une des revendications suivantes, **caractérisé en ce qu'**après l'achèvement de la fermentation, on incorpore des algues marines dans le sol ou le substrat de sol.

14. Procédé selon l'une des revendications précédentes, **caractérisé en ce que** la poudre céramique contient du quartz et de l'oxyde d'aluminium, de préférence 80 pour cent en poids de quartz et 20 pour cent en poids d'oxyde d'aluminium.

15. Procédé selon l'une des revendications précédentes, **caractérisé en ce que** la fermentation à une température de plus de 60 °C est suivie d'un compostage grâce à des organismes vivants du sol, en particulier des vers.
